# EUROPÄISCHE PATENTSCHRIFT

(11) **EP 4 149 797 B1**
(45) Veröffentlichungstag und Bekanntmachung des Hinweises auf die Patenterteilung: **22.05.2024**
(21) Anmeldenummer: 21731699.1
(22) Anmeldetag: 27.05.2021
(51) Int. Cl.: B60N 2/14, B60N 2/50, B60N 2/52, B60N 2/06, B61D 33/00

(54) **FÜHRERSITZ FÜR EIN SCHIENENFAHRZEUG**
DRIVER SEAT FOR A RAILWAY VEHICLE
SIÈGE DE CONDUCTEUR POUR VÉHICULE DE CHEMIN FER

(30) Priorität: 29.06.2020 DE 102020207998
(43) Veröffentlichungstag der Anmeldung: 22.03.2023
(73) Patentinhaber: Siemens Mobility GmbH, 81739 München (DE)
(72) Erfinder: DENK, Josef, 83684 Tegernsee (DE); PLABST, Roland, 82239 Alling (DE)
(74) Vertreter: Siemens Patent Attorneys
(86) Internationale Anmeldenummer: PCT/EP2021/064140
(87) Internationale Veröffentlichungsnummer: WO 2022/002490

(56) Entgegenhaltungen:
- EP-A1- 2 374 654
- US-A1- 2004 051 023

## Beschreibung

Die Erfindung betrifft einen Führersitz für ein Schienenfahrzeug, insbesondere einen Lokführersitz.

Für Schienenfahrzeuge sind verschiedenste Führersitze mit unterschiedlichen Funktionalitäten bekannt.

Einfachere bzw. billigere Schienenfahrzeug-Führersitze besitzen meist einen mäßigen Federungskomfort, der mittels mechanischer Federung realisiert ist.

Aufgrund der Kosten wird bei diesen Führersitzen auch auf eine pneumatische und/oder elektrische Unterstützung zum ergonomischen Einstellen des Führersitzes an die Bedürfnisse des Schienenfahrzeug-Führers verzichtet.

Aufwendigere Führersitze sind meist druckluftunterstützt und besitzen einen wesentlich höheren Komfort sowie zusätzliche Funktionalitäten (z.B. stellen diese eine Lordose-Stütze oder eine Unterstützung des Schienenfahrzeug-Führers bei einer von ihm vorgenommenen Sitzverstellung bereit).

Derartige druckluftunterstützte Führersitze weisen eine entsprechende Druckluftversorgung auf, bei der üblicherweise ein Druckluftschlauch im Inneren eines vertikalen, hohlen Stahlrohres geführt ist. Auf diesem Stahlrohr ist der eigentliche Sitz für den Schienenfahrzeug-Führer befestigt (z.B. über eine Schraubverbindung oder über eine Schweißverbindung).

Der Druckluftschlauch ist dabei nicht starr, sondern flexibel ausgeführt und ist derart geführt, dass Drehbewegungen des Sitzes in horizontaler Ebene ermöglicht werden.

Der Druckluftschlauch befindet sich dadurch im Bereich der Drehachse des Sitzes, so dass eine in horizontaler Ebene erfolgende Rechts-Links-Drehung des Sitzes um die Drehachse problemlos möglich ist. Vorteilhaft wird hier der Druckluftschlauch lediglich geringfügig verdreht.

Als weiteren Vorteil erlaubt der flexible Druckluftschlauch auch in geringem Umfang eine Vorwärts-Rückwärts-Bewegung des Sitzes, die durch eine Sitz-Anpassung an den Schienenfahrzeug-Führer notwendig wird.

Nachteilig werden bei diesem Konzept relativ schnell Grenzen bezüglich möglicher Bewegungswege (maximale Rotationswinkel bzw. maximale Verschiebewege) erreicht.

Darüber hinaus ist das beschriebene Konzept nicht für alle denkbaren Konstellationen geeignet. Befindet sich unter dem Sitz beispielsweise eine Lagerstelle des Sitzes, muss auf eine hohle Achse und damit auf die mittige Schlauchführung verzichtet werden.

Eine alternative Lösung für eine außermittige Druckluftführung besteht gemäß dem Stand der Technik darin, einen einzigen flexiblen Schlauch mit einer großen Schlaufe derart anzuordnen, dass Bewegungen ermöglicht werden. Diese Schlaufe befindet sich dann zwischen dem festen und dem dreh- bzw. verschiebbaren Sitzanteil und steht dort typischerweise weit über.

Dadurch besteht die Gefahr einer Beschädigung des Schlauches beim Vorbeigehen einer Person oder beim Drehen des Sitzes.

Aus der Druckschrift EP 2374654 A1 ist ein Fahrzeug bekannt, das ein Fahrerhaus mit einem Fahrerhausboden und eine relativ zum Fahrerhausboden bewegbar angeordnete Sitzkonsole mit einer schlauchförmigen Leitungsführung aufweist.

Aus der Druckschrift US 20040051023 A1 ist eine Sitzanordnung für ein Kraftfahrzeug mit einem Luftfederaufhängungssystem bekannt.

Es ist daher die Aufgabe der vorliegenden Erfindung, einen verbesserten Führersitz für ein Schienenfahrzeug bereitzustellen, mit dem die oben genannten Nachteile kostengünstig überwunden werden.

Diese Aufgabe wird durch die Merkmale des Anspruchs 1 gelöst. Vorteilhafte Weiterbildungen sind in den jeweiligen abhängigen Ansprüchen angegeben.

Die Erfindung betrifft einen Führersitz für ein Schienenfahrzeug, insbesondere einen Lokführersitz, mit einem Sitz, einem Rahmen, einem Träger, einer Befestigungseinheit und mit einer Druckluftleitung, die druckluftunterstützte Funktionalitäten des Führersitzes gewährleistet. Der Rahmen, der den Sitz trägt, ist drehbar gelagert mit einem ersten Ende des Trägers verbunden, so dass der Sitz um eine Achse des Trägers herum drehbar ist. Ein zweites Ende des Trägers ist mit der Befestigungseinheit verbunden, um den Träger in einem Leitstand eines Schienenfahrzeugs zu befestigen.

Die Druckluftleitung ist derart angeordnet, dass die druckluftunterstützten Funktionalitäten des Sitzes gewährleistet sind.

Die Druckluftleitung ist in einem ersten Bereich als eine Anzahl an Teilwindungen realisiert, die den Träger radial mit einem vorgegebenen Abstand zumindest teilweise umlaufend umfassen. Die Teilwindungen sind derart ausgebildet und befestigt, dass eine Drehbewegung des Sitzes eine Änderung des Abstands der Teilwindungen zum Träger bewirkt.

Erfindungsgemäß bilden die Teilwindungen der Druckluftleitung eine Spirale, die um den Träger herum mit einem vorgegebenen Abstand zum Träger aufgewickelt ist.

In einer vorteilhaften Weiterbildung ist die Druckluftleitung in einem zweiten Bereich als zumindest eine Teilschlaufe realisiert. Dabei ist die zumindest eine Teilschlaufe derart ausgebildet und befestigt, dass eine translatorische Bewegung des Sitzes eine Formänderung der Teilschlaufe bewirkt. Die translatorische Bewegung, die bevorzug in horizontaler Ebene erfolgt, bewirkt eine Änderung der Verlegungsform der Druckluftleitung und resultiert in einer Stauchung bzw. Streckung der Teilschlaufe.

Die Teilwindungen umfassen den Träger radial umlaufend. Die Drehbewegung des Sitzes, die bevorzugt in horizontaler Ebene erfolgt, bewirkt eine Änderung der Verlegungsform der Druckluftleitung und resultiert in einer Radiusänderung der Teilwindungen.

In einer vorteilhaften Weiterbildung ist zwischen dem Rahmen und dem Sitz eine pneumatische Federung und/oder eine pneumatische Sitzverstellung angeordnet, der die Druckluftleitung zur Realisierung bzw. Gewährleistung der pneumatischen Funktionalität zugeführt ist.

In einer vorteilhaften Weiterbildung ist der Träger als Rohr oder als Profil ausgebildet, das im Wesentlichen vertikal stehend zwischen der Befestigungseinheit und dem Rahmen angeordnet ist.

In einer vorteilhaften Weiterbildung ist der erste Bereich des Druckluftleitung an seinem ersten Ende mit der Befestigungseinheit und an seinem zweiten Ende mit dem Rahmen verbunden, um die Abstandsänderung bzw. Radiusänderung der Teilwindungen zu ermöglichen.

In einer vorteilhaften Weiterbildung ist der zweite Bereich der Druckluftleitung an seinem ersten Ende mit dem Sitz und/oder mit der pneumatischen Federung und/oder mit der pneumatischen Sitzverstellung verbunden, während sein zweites Ende mit dem Rahmen verbunden ist, um die Formänderung der Teilschlaufe zu ermöglichen.

In einer vorteilhaften Weiterbildung sind die Teilwindungen aus einem elastischen, starren Material, bevorzugt aus Polyamid oder ähnlichem, gefertigt.

In einer vorteilhaften Weiterbildung ist die zumindest eine Teilschlaufe aus einem flexiblen Schlauchmaterial gefertigt, beispielswiese ist sie als gewebeummantelter Gummischlauch realisiert.

In einer vorteilhaften Weiterbildung ist die Teilschlaufe derart dimensioniert, dass die Teilschlaufe bei einer Mittenstellung des Sitzes eine mechanisch entspannte Form aufweist, die sich bei einer translatorischen Bewegung des Sitzes ändert, nämlich entweder gestreckt oder gestaucht wird.

In einer bevorzugten Weiterbildung ist das zweite Ende des Trägers gegenüberliegend zum ersten Ende des Trägers angeordnet. Die Drehung des Sitzes erfolgt bevorzugt um eine Längsachse des Trägers.

Zusammengefasst bewirkt bei der vorliegenden Erfindung eine Rotation des Sitzes in einer ersten Richtung (z.B. im Uhrzeigersinn) eine Vergrößerung des Abstandes bzw. des Radius der Teilwindungen, während eine Rotation des Sitzes in einer dazu entgegengesetzten zweiten Richtung (z.B. entgegen dem Uhrzeigersinn) eine Verkleinerung des Radius der Teilwindungen bewirkt.

Entsprechend bewirkt eine translatorische Bewegung des Sitzes in einer ersten Richtung (z.B. parallel zu einer Fahrtrichtung des Schienenfahrzeugs, nach vorne gerichtet) eine Streckung der zumindest einen Teilschlaufe, während eine translatorische Bewegung des Sitzes in einer dazu entgegengesetzten zweiten Richtung (z.B. parallel zu einer Fahrtrichtung des Schienenfahrzeugs, nach hinten gerichtet) eine Stauchung der zumindest einen Teilschlaufe bewirkt.

Eine für die Funktionalität benötigte Anzahl an Teilwindungen bzw. Windungen und der zugehörige Nennradius werden abgestimmt auf einen zulässigen, vorgegebenen Rotationswinkel des Sitzes und auf einen vorgegebenen Durchmesser des Trägers.

Durch die Wahl des Materials für die Teilwindungen bzw. für resultierende Windungen wird eine vorgegebene Form und Lage gewährleistet.

Durch die vorliegende Erfindung wird eine langlebige Führersitz-Ausgestaltung erreicht und damit ein hoher Qualitätsanspruch der Sitz-Konstruktion sichergestellt.

Durch die vorliegende Erfindung wird das aus dem Stand der Technik bekannte, nachteilige undefinierte Verformen des flexiblen Druckluftschlauchs vermieden, die insbesondere durch eine Überlagerung der Dreh- und Verschiebebewegung entsteht.

Durch die vorliegende Erfindung werden Scheuerstellen bzw. Knickstellen an der Druckluftleitung vermieden.

Durch die vorliegende Erfindung wird eine Trennung der Druckluftversorgung in einen Anteil für die Sitz-Drehbewegung und in einen Anteil für die Sitz-Verschiebebewegung realisiert.

Durch die vorliegende Erfindung wird ermöglicht, das jeweilige Material der Druckluftleitung und damit seine mechanischen Eigenschaften auf das Bewegungsprofil hin zu optimieren.

Durch die vorliegende Erfindung wird die Druckluftversorgung in zwei Funktionalitäten bzw. Bestandteile aufgeteilt. Ein erster Anteil ist ausschließlich für die Kompensation der Rotationsbewegung des Sitzes vorgesehen, während ein zweiter Anteil ausschließlich für die Kompensation der translatorischen Bewegung des Sitzes vorgesehen ist.

Nachfolgend wird die vorliegende Erfindung beispielhaft anhand einer Zeichnung näher erläutert. Dabei zeigt:
- FIG 1: eine Ausgestaltung des erfindungsgemäßen Führersitzes, und
- FIG 2: mit Bezug auf FIG 1 eine vorteilhafte Weiterbildung des erfindungsgemäßen Führersitzes.

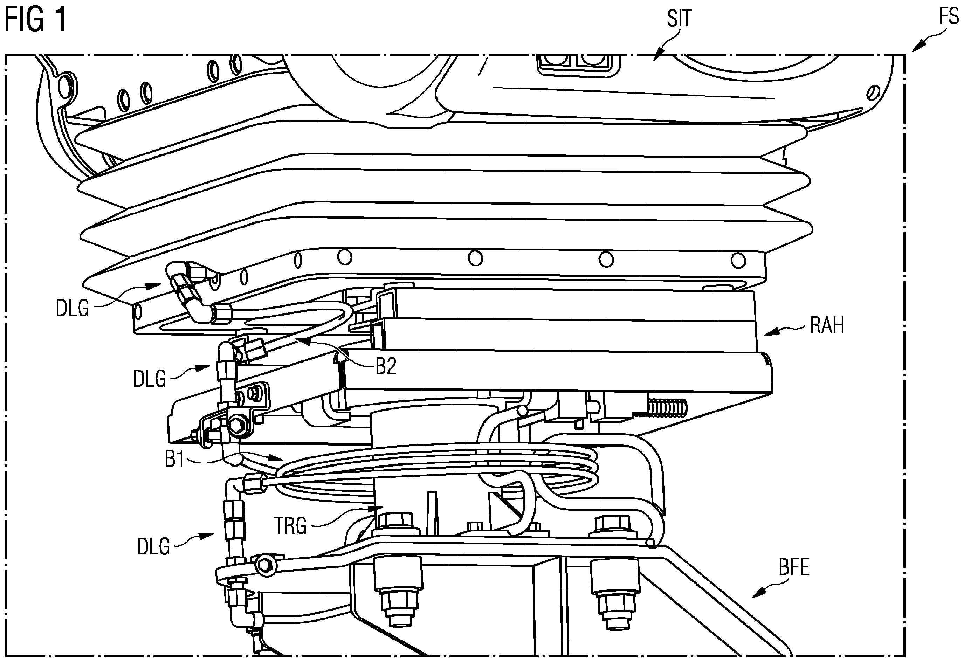

FIG 1 zeigt eine Ausgestaltung des erfindungsgemäßen Führersitzes FS.

Der Führersitz FS beinhaltet druckluftunterstützte Funktionalitäten, die über eine Druckluftleitung DLG, die Teil des Führersitzes FS ist, funktional gewährleistet bzw. realisiert werden.

Der Führersitz FS weist einen Sitz SIT, einen Rahmen RAH, einen Träger TRG und eine Befestigungseinheit BFE auf.

Der Sitz SIT ist über den Rahmen RAH, der den Sitz SIT trägt, mit einem ersten Ende des Trägers TRG verbunden. Ein zweites Ende des Trägers TRG ist mit der Befestigungseinheit BFE verbunden.

Der Sitz SIT ist für eine Benutzung durch einen Schienenfahrzeug-Führer ausgebildet und ist um eine Achse des Trägers TRG herum drehbar gelagert.

Die Befestigungseinheit BFE ist für eine Befestigung des Trägers TRG in einem Leitstand des Schienenfahrzeugs (hier nicht näher dargestellt) ausgebildet.

Die Druckluftleitung DLG ist in einem ersten Bereich B1 als eine Anzahl an Teilwindungen realisiert, die den Träger TRG radial umlaufend umfasst.

Die Teilwindungen sind dabei derart ausgebildet und befestigt, dass eine Drehbewegung des Sitzes SIT eine Änderung des Radius der Teilwindung bewirkt.

Durch die Radiusänderung wird somit die erfolgte Drehbewegung des Sitzes SIT kompensiert.

Die Druckluftleitung DLG ist in einem zweiten Bereich B2 als zumindest eine Teilschlaufe realisiert. Diese Teilschlaufe ist dabei derart ausgebildet und befestigt, dass eine translatorische Bewegung des Sitzes SIT durch eine Formänderung der Teilschlaufe kompensiert wird.

Der Rahmen RAH, der den Sitz SIT trägt, ist drehbar gelagert mit dem ersten Ende des Trägers TRG verbunden.

Das zweite Ende des Trägers TRG ist gegenüberliegend zum ersten Ende des Trägers TRG angeordnet. Der Träger TRG ist hier als Rohr ausgebildet, das im Wesentlichen vertikal stehend zwischen der Befestigungseinheit BFE und dem Rahmen RAH angeordnet ist.

Zwischen dem Rahmen RAH und dem Sitz SIT ist eine pneumatische Federung und/oder eine pneumatische Sitzverstellung angeordnet, der die Druckluftleitung DLG zur Realisierung der pneumatischen Funktionalität zugeführt ist.

Der erste Bereich B1 der Druckluftleitung DLG (mit den Teilwindungen) ist an seinem ersten Ende mit der Befestigungseinheit BFE und mit seinem zweiten Ende mit dem Rahmen RAH verbunden. Dadurch ist er so fixiert, dass die oben beschriebene Radiusänderung der Teilwindungen ermöglicht wird.

In einer bevorzugten Weiterbildung ist der zweite Bereich B2 der Druckluftleitung (mit der zumindest einen Teilschlaufe) an seinem ersten Ende mit dem Sitz SIT bzw. mit der pneumatischen Federung und/oder mit der pneumatischen Sitzverstellung verbunden, während sein zweites Ende mit dem Rahmen RAH verbunden ist. Dadurch ist er so fixiert, dass die oben beschriebene Formänderung der Teilschlaufe ermöglicht wird.

Die Teilwindung ist aus einem elastischen, starren Material gefertigt, beispielweise aus Polyamid oder ähnlichem.

Wie hier dargestellt, bilden mehrere Teilwindungen der Druckluftleitung DLG eine Spirale, die um den Träger TRG herum mit einem vorgegebenen Abstand zum Träger TRG aufgewickelt ist.

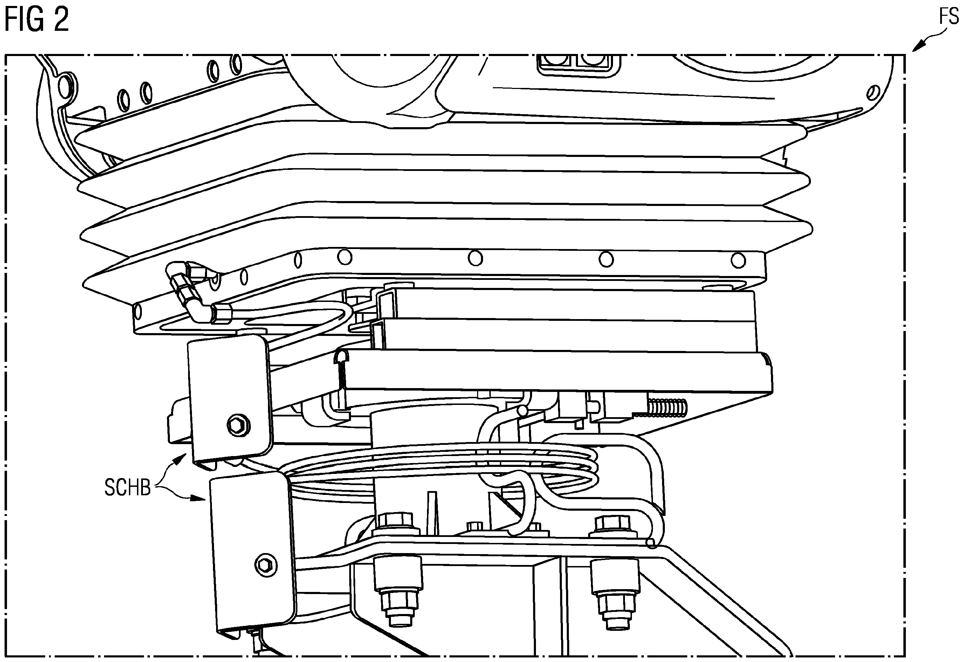

FIG 2 zeigt mit Bezug auf FIG 1 eine vorteilhafte Weiterbildung des erfindungsgemäßen Führersitzes.

Um den Druckluftschlauch sowie dessen Befestigungen vor Beschädigungen zu schützen, sind zusätzliche Schutzbleche SCHB vorgesehen.

## Patentansprüche

1. Führersitz für ein Schienenfahrzeug,
- mit einem Sitz, einem Rahmen, einem Träger, einer Befestigungseinheit und mit einer Druckluftleitung, die druckluftunterstützte Funktionalitäten des Führersitzes gewährleistet,
- bei dem der Rahmen, der den Sitz trägt, drehbar gelagert mit einem ersten Ende des Trägers verbunden ist, so dass der Sitz um eine Achse des Trägers herum drehbar ist,
- bei dem ein zweites Ende des Trägers mit der Befestigungseinheit verbunden ist, um den Träger in einem Leitstand eines Schienenfahrzeugs zu befestigen,
- bei dem die Druckluftleitung derart angeordnet ist, dass die druckluftunterstützten Funktionalitäten des Sitzes gewährleistet sind,
- bei dem die Druckluftleitung in einem ersten Bereich (81) als eine Anzahl an Teilwindungen realisiert ist, die den Träger radial mit einem vorgegebenen Abstand zumindest teilweise umlaufend umfassen,
- bei dem die Teilwindungen derart ausgebildet und befestigt sind, dass eine Drehbewegung des Sitzes eine Änderung des Abstands der Teilwindungen zum Träger bewirkt,
**dadurch gekennzeichnet,**
- **dass** die Teilwindungen der Druckluftleitung eine Spirale bilden, die um den Träger herum mit einem vorgegebenen Abstand zum Träger aufgewickelt ist.

2. Führersitz nach Anspruch 1,
- bei dem die Druckluftleitung in einem zweiten Bereich (B2) als zumindest eine Teilschlaufe realisiert ist,
- bei dem die zumindest eine Teilschlaufe derart ausgebildet und befestigt ist, dass eine translatorische Bewegung des Sitzes eine Formänderung der Teilschlaufe bewirkt.

3. Führersitz nach einem der vorhergehenden Ansprüche, bei dem zwischen dem Rahmen und dem Sitz eine pneumatische Federung und/oder eine pneumatische Sitzverstellung angeordnet ist, der die Druckluftleitung zur Realisierung bzw. Gewährleistung der pneumatischen Funktionalität zugeführt ist.

4. Führersitz nach einem der vorhergehenden Ansprüche, bei dem der Träger als Rohr oder als Profil ausgebildet ist, das im Wesentlichen vertikal stehend zwischen der Befestigungseinheit und dem Rahmen angeordnet ist.

5. Führersitz nach einem der vorhergehenden Ansprüche, bei dem der erste Bereich der Druckluftleitung an seinem ersten Ende mit der Befestigungseinheit und an seinem zweiten Ende mit dem Rahmen verbunden ist, um die Abstandsänderung bzw. Radiusänderung der Teilwindungen zu ermöglichen.

6. Führersitz nach Anspruch 2, bei dem der zweite Bereich des Druckluftleitung an seinem ersten Ende mit dem Sitz und/oder mit der pneumatischen Federung und/oder mit der pneumatischen Sitzverstellung verbunden ist, und bei dem sein zweites Ende mit dem Rahmen verbunden ist, um die Formänderung der Teilschlaufe zu ermöglichen.

7. Führersitz nach einem der vorhergehenden Ansprüche, bei dem die Teilwindungen aus einem elastischen, starren Material, bevorzugt aus Polyamid, gefertigt sind.

8. Führersitz nach einem der Ansprüche 2 oder 6, bei dem die zumindest eine Teilschlaufe aus einem flexiblen Schlauchmaterial gefertigt ist.

9. Führersitz nach einem der Ansprüche 2, 6 oder 8, bei dem die Teilschlaufe derart dimensioniert ist, dass die Teilschlaufe bei einer Mittenstellung des Sitzes eine mechanisch entspannte Form aufweist, die sich bei einer translatorischen Bewegung des Sitzes ändert, nämlich entweder gestreckt oder gestaucht wird.

## Claims

1. Driver's seat for a rail vehicle,
- with a seat, a frame, a carrier, a fastening unit and with a compressed air line which ensures compressed air-assisted functionalities of the driver's seat,
- in the case of which the frame which supports the seat is connected in a rotatably mounted manner to a first end of the carrier, with the result that the seat can be rotated around an axis of the carrier,
- in the case of which a second end of the carrier is connected to the fastening unit, in order to fasten the carrier in a control desk of a rail vehicle,
- in the case of which the compressed air line is arranged in such a way that the compressed air-assisted functionalities of the seat are ensured,
- in the case of which the compressed air line is realised in a first region (B1) as a number of part windings which enclose the carrier in an at least partially peripheral manner radially at a predefined spacing,
- in the case of which the part windings are configured and fastened in such a way that a rotational movement of the seat brings about a change in the spacing of the part windings from the carrier, **characterized**
- **in that** the part windings of the compressed air line form a spiral which is wound around the carrier at a predefined spacing from the carrier.

2. Driver's seat according to Claim 1,
- in the case of which the compressed air line is realised in a second region (B2) as at least one part loop,
- in the case of which the at least one part loop is configured and fastened in such a way that a translational movement of the seat brings about a shape change of the part loop.

3. Driver's seat according to either of the preceding claims, in the case of which a pneumatic suspension system and/or a pneumatic seat adjustment, to which the compressed air line is routed in order to realise or ensure the pneumatic functionality, are/is arranged between the frame and the seat.

4. Driver's seat according to one of the preceding claims, in the case of which the carrier is configured as a tube or as a profile which is arranged in a substantially vertically upright manner between the fastening unit and the frame.

5. Driver's seat according to one of the preceding claims, in the case of which the first region of the compressed air line is connected at its first end to the fastening unit and at its second end to the frame, in order to make the spacing change and radius change of the part windings possible.

6. Driver's seat according to Claim 2, in the case of which the second region of the compressed air line is connected at its first end to the seat and/or to the pneumatic suspension system and/or to the pneumatic seat adjustment, and in the case of which its second end is connected to the frame, in order to make the shape change of the part loop possible.

7. Driver's seat according to one of the preceding claims, in the case of which the part windings are manufactured from an elastic, rigid material, preferably from polyamide.

8. Driver's seat according to either of Claims 2 or 6, in the case of which the at least one part loop is manufactured from a flexible hose material.

9. Driver's seat according to one of Claims 2, 6 or 8, in the case of which the part loop is dimensioned in such a way that, in the case of a middle position of the seat, the part loop has a mechanically relieved shape which changes in the case of a translational movement of the seat, namely is either stretched or compressed.

## Revendications

1. Siège de conducteur pour un véhicule de ferroviaire,
- comprenant un siège, un cadre, un support, une unité de fixation et comprenant un conduit pour l'air comprimé, qui garantit des fonctionnalités du siège du conducteur assistées par air comprimé ;
- dans lequel le cadre, qui supporte le siège, est relié à une première extrémité du support en étant monté de manière rotative, d'une manière telle que le siège est rotatif autour d'un axe du support ;
- dans lequel une deuxième extrémité du support est reliée à l'unité de fixation, afin de fixer le support dans un poste de conduite d'un véhicule ferroviaire ;
- dans lequel le conduit pour l'air comprimé est disposé d'une manière telle que les fonctionnalités du siège assistées par air comprimé sont garanties ;
- dans lequel le conduit pour l'air comprimé est réalisé, dans une première zone (B1), sous la forme d'une multitude d'enroulements partiels qui entourent le support dans la direction radiale, au moins en partie, avec une distance prédéterminée ;
- dans lequel les enroulements partiels sont réalisés et fixés d'une manière telle qu'un mouvement de rotation du siège entraîne une modification de la distance des enroulements partiels par rapport au support ;
**caractérisé**
- **en ce que** les enroulements partiels du conduit pour l'air comprimé forment une spirale qui vient s'enrouler autour du support avec une distance prédéterminée par rapport au support.

2. Siège de conducteur selon la revendication 1,
- dans lequel le conduit pour l'air comprimé est réalisé, dans une deuxième zone (B2), sous la forme d'au moins une boucle partielle ;
- dans lequel ladite au moins une boucle partielle est réalisée et fixée d'une manière telle qu'un mouvement de translation du siège entraîne une modification de la forme de la boucle partielle.

3. Siège de conducteur selon l'une quelconque des revendications précédentes, dans lequel, entre le cadre et le siège, est disposé(e) une suspension pneumatique et/ou un réglage pneumatique du siège, à laquelle ou auquel vient s'appliquer le conduit pour l'air comprimé à des fins de mise en œuvre, respectivement de garantie de la fonctionnalité pneumatique.

4. Siège de conducteur selon l'une quelconque des revendications précédentes, dans lequel le support est réalisé sous la forme d'un tube ou sous la forme d'un profilé qui est disposé essentiellement en étant dressé à la verticale entre l'unité de fixation et le cadre.

5. Siège de conducteur selon l'une quelconque des revendications précédentes, dans lequel la première zone du conduit pour l'air comprimé est reliée, à sa première extrémité, à l'unité de fixation et, à sa deuxième extrémité, au cadre, pour permettre la modification de la distance, respectivement la modification du rayon des enroulements partiels.

6. Siège de conducteur selon la revendication 2, dans lequel la deuxième zone du conduit pour l'air comprimé, à sa première extrémité, est reliée au siège et/ou à la suspension pneumatique et/ou au réglage pneumatique du siège, et dans lequel, sa deuxième extrémité est reliée au cadre pour permettre la modification de la forme de la boucle partielle.

7. Siège de conducteur selon l'une quelconque des revendications précédentes, dans lequel les enroulements partiels sont réalisés à partir d'une matière rigide, élastique, de préférence à partir de polyamide.

8. Siège de conducteur selon l'une quelconque des revendications 2 ou 6, dans lequel ladite au moins une boucle partielle est réalisée à partir d'une matière en forme de tuyau flexible.

9. Siège de conducteur selon l'une quelconque des revendications 2, 6 ou 8, dans lequel la boucle partielle est dimensionnée d'une manière telle que la boucle partielle présente, dans une position médiane du siège, une forme détendue du point de vue mécanique, qui se modifie lors d'un mouvement de translation du siège, plus précisément soit s'étire, soit se comprime.
